# EUROPÄISCHE PATENTSCHRIFT

(11) **EP 3 517 946 B1**
(45) Veröffentlichungstag und Bekanntmachung des Hinweises auf die Patenterteilung: **13.04.2022**
(21) Anmeldenummer: 19153194.6
(22) Anmeldetag: 23.01.2019
(51) Int. Cl.: G01N 29/024, G01H 5/00, G01N 29/32, G01N 29/44

(54) **VERFAHREN ZUR ERMITTLUNG EINES KORRIGIERTEN WERTS FÜR DIE VISKOSITÄTSABHÄNGIGE SCHALLGESCHWINDIGKEIT IN EINEM ZU UNTERSUCHENDEN FLUID**
METHOD FOR DETERMINING A CORRECTED VALUE FOR VISCOSITY-DEPENDENT SOUND VELOCITY IN A FLUID TO BE EXAMINED
PROCÉDÉ DE DÉTERMINATION D'UNE VALEUR CORRIGÉE DE LA VITESSE SONIQUE DÉPENDANT DE LA VISCOSITÉ DANS UN FLUIDE À ANALYSER

(30) Priorität: 24.01.2018 AT 500622018
(43) Veröffentlichungstag der Anmeldung: 31.07.2019
(73) Patentinhaber: Anton Paar GmbH, 8054 Graz-Straßgang (AT)
(72) Erfinder: ROSSEGGER, Stefan, 8010 Graz (AT); BREIDLER, Robert, 8652 Kindberg (AT); AMSÜSS, Robert, 8073 Feldkirchen bei Graz (AT); SCHANTL, Lukas, 8042 Graz (AT)
(74) Vertreter: Wildhack & Jellinek

(56) Entgegenhaltungen:
- JP-A- S6 067 839
- US-A1- 2009 178 474
- ROMAN BEIGELBECK ET AL: "Resonant pressure wave setup for simultaneous sensing of longitudinal viscosity and sound velocity of liquids", MEASUREMENT SCIENCE AND TECHNOLOGY, IOP, BRISTOL, GB, Bd. 24, Nr. 12, 22. Oktober 2013 (2013-10-22), Seite 125101, XP020254107, ISSN: 0957-0233, DOI: 10.1088/0957-0233/24/12/125101 [gefunden am 2013-10-22]

## Beschreibung

Die Erfindung betrifft ein Verfahren zur Ermittlung eines korrigierten Werts für die viskositätsabhängige Schallgeschwindigkeit in einem zu untersuchenden Fluid gemäß dem Oberbegriff des Patentanspruchs 1 und eine Vorrichtung gemäß dem Oberbegriff des Patentanspruchs 12.

Aus dem Stand der Technik sind verschiedene Vorrichtungen zur Bestimmung der Schallgeschwindigkeit in Fluiden bekannt. Bei einer derartigen Vorrichtung werden Schallimpulse beispielsweise durch eine Schichtfolge Festkörper-Fluid-Festkörper gesendet und die Schallgeschwindigkeit wird aus der Laufzeit der Impulse durch die Fluidschicht berechnet. Weiters sind Vorrichtungen zur Bestimmung der Schallgeschwindigkeit bekannt, bei denen Schallimpulse auf eine Grenzfläche aus Festkörper und Fluid auftreffen und der an der Grenzfläche reflektierte Anteil des Schallimpulses untersucht wird.

Aus dem Dokument ROMAN BEIGELBECK ET AL: "Resonant pressure wave setup for simultaneous sensing of longitudinal viscosity and sound velocity of liquids", MEASUREMENT SCIENCE AND TECHNOLOGY, IOP, BRISTOL, GB, Bd. 24, Nr. 12, 22. Oktober 2013 (2013-10-22), Seite 125101, XP020254107 ist die gleichzeitige Bestimmung der Viskosität und der Schallgeschwindigkeit in Flüssigkeiten bekannt. Dazu wird eine spezielle Messzelle mit einem an einer Seite eingebauten Piezoelement, das im untersuchten Fluid stehende Druckwellen induziert, verwendet. Die Schallgeschwindigkeit wird durch Ermittlung der Zeitverzögerung zwischen Eingangs- und Reflexions-Burstsignalen bestimmt.

Für Labormessungen ist es wünschenswert, Schallgeschwindigkeitsmessungen an möglichst geringen Probenmengen, z. B. in Durchflussmesszellen oder Probenbehältern mit geringen Ausmaßen, in einer Stützkonstruktion durchzuführen. Nachteil bei den aus dem Stand der Technik bekannten Verfahren ist, dass Prozesse oder Fluideigenschaften wie die Viskosität, die beim Durchgang eines Schallimpulses durch ein Fluid eine Energiedissipation bzw. eine Dämpfung bewirken, bei der Bestimmung der Schallgeschwindigkeit nicht berücksichtigt werden. Dies führt besonders bei kleiner Messzellen-Baugröße bzw. einer kurzen Messstrecke zu einer Verfälschung der bestimmten Schalllaufzeit.

Aufgabe der Erfindung ist es daher, eine einfache und näherungsweise Korrektur des durch die Viskositäten eines zu untersuchenden Fluids bedingten Messfehlers bei der Bestimmung der Schalllaufzeit bereit zu stellen.

Die Erfindung löst diese Aufgabe bei einem Verfahren zur Ermittlung eines korrigierten Werts für die viskositätsabhängige Schallgeschwindigkeit in einem zu untersuchenden Fluid
- wobei Schallimpulse erzeugt und an das zu untersuchende Fluid übertragen werden,
- wobei die Schallimpulse nach Zurücklegen einer vorgegebenen Messstrecke in dem zu untersuchenden Fluid registriert werden,
- wobei der Ersteinsatz des ersten nach Zurücklegen der Messstrecke empfangenen Schallimpulses ermittelt und die Laufzeit des ersten empfangenen Schallimpulses in dem zu untersuchenden Fluid bestimmt wird,
mit den kennzeichnenden Merkmalen des Patentanspruchs 1.

Erfindungsgemäß ist dabei vorgesehen, dass
- ein Viskositätswert für das zu untersuchende Fluid vorgegeben oder ermittelt wird und
- die Laufzeit des ersten empfangenen Schallimpulses und der Viskositätswert zur Ermittlung der Schallgeschwindigkeit in dem zu untersuchenden Fluid herangezogen werden, sodass derart der durch die Viskosität des zu untersuchenden Fluids bedingte Messfehler bei der Bestimmung der Laufzeit des ersten empfangenen Schallimpulses in dem zu untersuchenden Fluid korrigiert wird.

Zur möglichst exakten Bestimmung der Schallgeschwindigkeit im zu untersuchenden Fluid kann bei einem erfindungsgemäßen Verfahren vorgesehen sein, dass
- eine erste Korrekturtabelle für den Zusammenhang zwischen der Viskosität und der Ersteinsatzabweichung des ersten empfangenen Schallimpulses für Fluide mit jeweils bekannter Viskosität bereitgestellt wird,
- eine Korrektur hinsichtlich der Viskosität des bei der Vermessung erhaltenen Ersteinsatzes des ersten empfangenen Schallimpulses für das zu untersuchende Fluid mittels der ersten Korrekturtabelle und dem vorgegebenen oder ermittelten Viskositätswert vorgenommen wird und
- die Schallgeschwindigkeit in dem zu untersuchenden Fluid durch Berechnung aus der korrigierten Laufzeit des ersten empfangenen Schallimpulses und der Länge der vorgegebenen Messstrecke bestimmt wird.

Bei einer alternativen Ausführungsform der Erfindung kann zur besonders einfachen und exakten Bestimmung der Schallgeschwindigkeit in einem zu untersuchenden Fluid vorgesehen sein, dass
- eine erste Justiertabelle für den Ersteinsatz des ersten empfangenen Schallimpulses für Fluide mit jeweils bekannter Schallgeschwindigkeit und bekannter Viskosität bereitgestellt wird und
- der Ersteinsatz des ersten empfangenen Schallimpulses und der vorgegebene oder ermittelte Viskositätswert zur Bestimmung der Schallgeschwindigkeit in dem zu untersuchenden Fluid mittels der ersten Justiertabelle herangezogen werden.

Um die Laufzeit des Schallimpulses mit ausreichender Genauigkeit bestimmen zu können, kann vorgesehen sein, dass als Ersteinsatz des ersten empfangenen Schallimpulses
- der erste Nulldurchgang des Schallimpulses nach dem ersten registrierten Maximum des Schallimpulses, oder
- das erste registrierte Eintreffen das Schallpulses, oder
- die Peakposition des ersten Maximums des ersten registrierten Schallimpulses ermittelt wird.

Um eine einfache und exakte Korrektur des viskositätsbedingten Messfehlers bei der Schallgeschwindigkeit bzw. der Laufzeit des Schallimpulses zu gewährleisten, kann vorgesehen sein, dass
- ein bekannter Viskositätswert oder ein bekannter Wertebereich der Viskosität für das zu untersuchende Fluid vorgegeben wird oder
- eine Datenbank von bekannten Viskositätswerten oder Wertebereichen der Viskosität für Fluide bereitgestellt wird und der Viskositätswert oder ein bekannter Wertebereich der Viskosität für das zu untersuchende Fluid in der Datenbank ermittelt wird.

Um besonders präzise Messdaten der Viskosität für das zu untersuchende Fluid für die Korrektur verwenden zu können, kann vorgesehen sein, dass der Viskositätswert für das zu untersuchende Fluid mittels eines Messverfahrens zur Bestimmung der Viskosität, insbesondere mittels eines Biegeschwingers, ermittelt wird.

Eine einfache Methode zur Bestimmung der Viskosität aus der Laufzeit des Schallimpulses, unter Verwendung des Zusammenhangs zwischen der Pulsbreite des ersten empfangenen Schallimpulses und der Viskosität, kann bereitgestellt werden, indem
- eine zweite Justiertabelle für den Zusammenhang zwischen der Viskosität und der Pulsbreite des ersten nach Zurücklegen der Messstrecke empfangenen Schallimpulses für Fluide mit jeweils bekannter Viskosität bereitgestellt wird,
- die Pulsbreite des ersten nach Zurücklegen der Messstrecke empfangenen Schallimpulses in dem zu untersuchenden Fluid ermittelt wird und
- der Viskositätswert des zu untersuchenden Fluids mittels der zweiten Justiertabelle und der ermittelten Pulsbreite des ersten empfangenen Schallimpulses bestimmt wird.

Um die Pulsbreite mit ausreichender Genauigkeit festlegen zu können, kann vorgesehen sein, dass als Pulsbreite des ersten empfangenen Schallimpulses
- die Zeitspanne zwischen dem Zeitpunkt des ersten Empfangens des Schallimpulses und dem ersten registrierten Nulldurchgang des Schallimpulses oder
- die Halbwertsbreite des ersten empfangenen Schallimpulses
   ermittelt wird.

Um den Einfluss der Temperatur gleichzeitig mit dem Einfluss der Viskosität auf die Laufzeit eines Schallimpulses bei der Ermittlung eines korrigierten Werts für die Schallgeschwindigkeit zu berücksichtigen, kann vorgesehen sein, dass
- die erste Korrekturtabelle für den Zusammenhang zwischen der Viskosität und der Ersteinsatzabweichung oder die erste Justiertabelle für den Ersteinsatz des ersten empfangenen Schallimpulses für Fluide mit jeweils bekannter Schallgeschwindigkeit und bekannter Viskosität bei verschiedenen Temperaturen bereitgestellt wird,
- die Temperatur des zu untersuchenden Fluids während der Vermessung ermittelt wird und
- die Temperatur bei der Korrektur des bei der Vermessung erhaltenen Schallgeschwindigkeitswerts mittels der ersten Korrekturtabelle oder der ersten Justiertabelle berücksichtigt wird.

Um auf besonders einfachem Weg aus der Messung der Laufzeit eines Schallimpulses in einem zu untersuchenden Fluid einen korrigierten Wert für die viskositätsabhängige Schallgeschwindigkeit zu erhalten, kann bei einem erfindungsgemäßen Verfahren vorgesehen sein, dass
- die erste Korrekturtabelle für den Zusammenhang zwischen der Viskosität und der Ersteinsatzabweichung und die zweite Justiertabelle für den Zusammenhang zwischen der Viskosität und der Pulsbreite zur Erstellung einer gemeinsamen Korrekturtabelle herangezogen werden, wobei
   die Ersteinsatzabweichung mittels der für das zu untersuchende Fluid ermittelten Pulsbreite und der gemeinsamen Korrekturtabelle ermittelt wird und Schallgeschwindigkeit in dem zu untersuchenden Fluid durch Berechnung aus der korrigierten Laufzeit des ersten empfangenen Schallimpulses und der Länge der vorgegebenen Messstrecke bestimmt wird oder
- die erste Justiertabelle für den Ersteinsatz des ersten empfangenen Schallimpulses für Fluide mit jeweils bekannter Schallgeschwindigkeit und bekannter Viskosität und die zweite Justiertabelle für den Zusammenhang zwischen der Viskosität und der Pulsbreite für Fluide mit jeweils bekannter Viskosität zur Erstellung einer gemeinsamen Korrekturtabelle herangezogen werden wobei der für das zu untersuchenden Fluid bestimmte Ersteinsatz des ersten empfangenen Schallimpulses und die für das zu untersuchenden Fluid bestimmte Pulsbreite zur Ermittlung der Schallgeschwindigkeit mittels der gemeinsamen Korrekturtabelle herangezogen werden.

Da bei der Vermessung von Fluiden mit hoher Viskosität große Messfehler auftreten und die Gesamtsignale für Messzellen kleiner Baugröße nicht auswertbar sind, kann vorgesehen sein, dass die Viskosität des zu untersuchenden Fluids größer als 1000 mPa·s ist und/oder dass die Länge der Messstrecke kürzer als 1 cm ist.

Eine erfindungsgemäße Vorrichtung zur Ermittlung eines korrigierten Werts für die viskositätsabhängige Schallgeschwindigkeit in einem zu untersuchenden Fluid umfassend
- einen Schallimpulsgeber zur Aussendung von Schallimpulsen und einen Schallimpulsempfänger zur Registrierung von ankommenden Schallimpulsen,
   wobei zwischen dem Schallimpulsgeber und dem Schallimpulsempfänger eine vorgegebene Messstrecke in einer Messzelle angeordnet ist und
- eine mit dem Schallimpulsgeber und dem Schallimpulsempfänger verbundene Auswerteeinheit, sieht vor, dass der Schallimpulsgeber, der Schallimpulsempfänger und die Auswerteeinheit dazu ausgebildet sind, ein erfindungsgemäßes Verfahren durchzuführen.

Um bei der Ermittlung eines korrigierten Werts für die viskositätsabhängige Schallgeschwindigkeit auch die Temperatur zu berücksichtigen, kann vorgesehen sein, dass ein mit der Auswerteeinheit verbundener Sensor zur Bestimmung der Temperatur des zu untersuchenden Fluids vorgesehen ist.

Um eine erfindungsgemäße Vorrichtung mit besonders kompakter Bauweise bereitzustellen, kann vorgesehen sein, dass
- der Schallimpulsgeber und der Schallimpulsempfänger als ein kombinierter Schallimpulsgeber/-empfänger ausgebildet sind, der an einem Ende der Messstrecke angeordnet ist,
- am anderen Ende der Messstrecke dem Schallimpulsgeber/-empfänger gegenüberliegend eine schallreflektierende Grenzfläche angeordnet ist und
- der Schallimpulsgeber/-empfänger durch die Registrierung von ankommenden Schallimpulsen zur Aussendung von Schallimpulsen anregbar ist.

Weitere Vorteile und Ausgestaltungen der Erfindung ergeben sich aus der Beschreibung und den beiliegenden Zeichnungen.

Besonders vorteilhafte, aber nicht einschränkend zu verstehende Ausführungsbeispiele der Erfindung werden im Folgenden anhand der beiliegenden Zeichnungen schematisch dargestellt und unter Bezugnahme auf die Zeichnungen beispielhaft beschrieben.

Im Folgenden zeigen schematisch:
Fig. 1 schematisch den Aufbau einer erfindungsgemäßen Schallmesszelle,
Fig. 2 ein Empfangssignal für ein Fluid,
Fig. 3 Empfangssignale von zwei Fluiden mit unterschiedlicher Viskosität,
Fig. 4 das Empfangssignal aus Fig. 2 mit eingetragener Pulsbreite,
Fig. 5 die Empfangssignale aus Fig. 3 mit eingetragenen Pulsbreiten,
Fig. 6 die Abweichung der Laufzeit des Schallimpulses aufgetragen gegen die Viskosität,
Fig. 7 den Zusammenhang zwischen Pulsbreite und der Viskosität und
Fig. 8 die Abweichung der Schallgeschwindigkeit aufgetragen gegen die Viskosität.

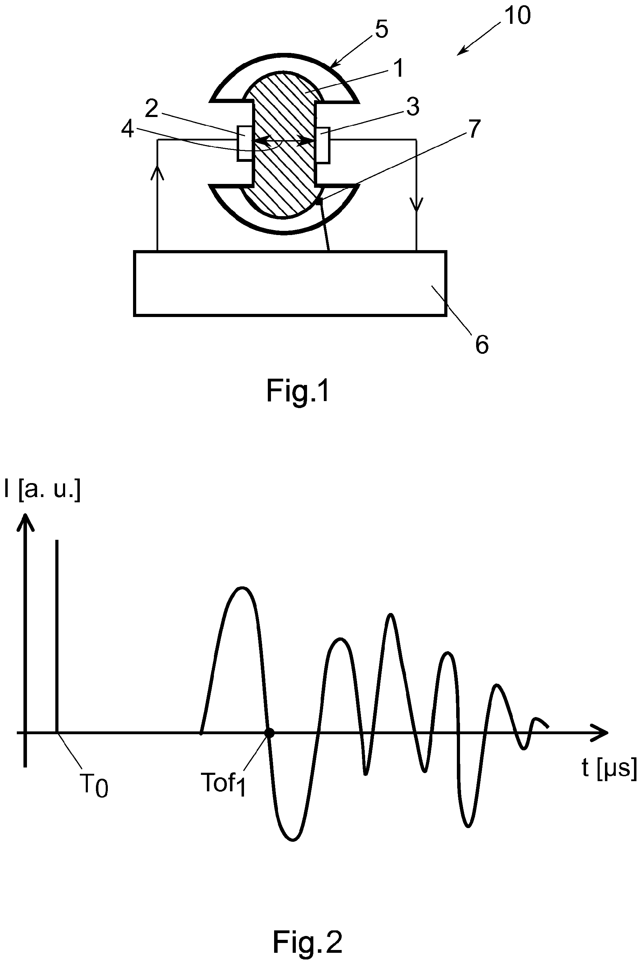

Fig. 1 zeigt eine erfindungsgemäße Vorrichtung 10 zur Ermittlung eines korrigierten Werts für die viskositätsabhängige Schallgeschwindigkeit in einem zu untersuchenden Fluid 1. Die Vorrichtung 10 umfasst dabei eine Messzelle 5, in der sich das zu untersuchende Fluid 1 befindet, einen Schallimpulsgeber 2 zur Aussendung von Schallimpulsen und einen Schallimpulsempfänger 3 zur Registrierung von ankommenden Schallimpulsen. Der Schallimpulsgeber 2 und der Schallimpulsempfänger 3 sind dabei seitlich außen an der Messzelle 5 angeordnet, sodass sie einander gegenüberliegen. Als Schallimpulsgeber 2 eignen sich beispielsweise piezoelektrische Ultraschallsignalgeber und als Schallimpulsempfänger 3 entsprechende Ultraschallsignalempfänger.

Zwischen dem Schallimpulsgeber 2 und dem Schallimpulsempfänger 3 ist eine Messstrecke 4 in der Messzelle 5 angeordnet und eine Auswerteeinheit 6 ist mit dem Schallimpulsgeber 2 und dem Schallimpulsempfänger 3 verbunden. Um eine Störung des am Schallimpulsempfänger 3 ankommenden Schallimpulses bzw. Empfangssignals durch Körperschallwellen zu verhindern, ist die Länge der Messstrecke 4 so gewählt, dass der Weg zwischen dem Schallimpulsgeber 2 und dem Schallimpulsempfänger 3 über die Festkörperanteile signifikant länger ist.

Die Auswerteeinheit 6 steuert im gezeigten Ausführungsbeispiel den Schallimpulsgeber 2 an, Schallimpulse zu vorgegebenen Zeitpunkten abzugeben und die vom Schallimpulsempfänger 3 bereitgestellten Daten werden von der Auswerteeinheit 6 empfangen und ausgewertet. Die Auswerteeinheit 6 ist dazu ausgebildet, ein erfindungsgemäßes Verfahren zur Ermittlung eines korrigierten Werts für die viskositätsabhängige Schallgeschwindigkeit durchzuführen, worauf im Folgenden noch näher eingegangen wird. Alternativ kann bei einer erfindungsgemäßen Vorrichtung 10 die Auswerteeinheit 6 auch eine getrennte Steuerungs- bzw. Elektronikeinheit aufweisen.

Beim in Fig. 1 gezeigten Ausführungsbeispiel ist weiters ein Temperatursensor 7 zur Bestimmung der Temperatur des zu untersuchenden Fluids 1 an der Messzelle 5 angeordnet und mit der Auswerteeinheit 6 verbunden.

Eine derartig ausgestaltete erfindungsgemäße Vorrichtung 10 kann beispielsweise zur Ermittlung der Schalllaufzeit in einem Fluid, beispielsweise während das Fluid ein Rohr durchfließt, angewendet werden. In diesem Fall ist das Rohr als Messzelle 5, in dem sich das zu untersuchende Fluid 1 befindet zu betrachten. Der Schallimpulsgeber 2 und der Schallimpulsempfänger 3 sind einander gegenüberliegend jeweils an den Rohraußenflächen angeordnet.

Alternativ kann eine erfindungsgemäße Vorrichtung 10 auch für den Einbau in Prozessleitungen verwendet werden, wobei die Prozessleitung in diesem Fall als Messzelle 5 dient. Dabei sind der Schallimpulsgeber 2 und der Schallimpulsempfänger 3 an einem gabelförmigen Bauteil mit kleinen Ausmaßen angeordnet und einander auf dem Bauteil gegenüberliegen.

Eine erfindungsgemäße Vorrichtung 10 ist auch für die Durchführung von Labormessungen unter Verwendung von möglichst geringen Probenmengen geeignet. Dabei wird als Messzelle 5, beispielsweise eine Durchflussmesszelle bzw. ein Probenbehälter, mit geringen Ausmaßen in einer Stützkonstruktion verwendet, um ein zu untersuchendes Fluid 1 darin aufzubewahren.

Beim in Fig. 1 gezeigten Ausführungsbeispiel steuert die Auswerteeinheit 6 den Schallimpulsgeber 2 an, sodass Schallimpulse vom Schallimpulsgeber 2 abgegeben werden. Die Schallimpulse werden dabei durch eine Schichtfolge Festkörper-Fluid-Festkörper gesendet, wobei jeweils die Außenwände der Messzelle 5 den Festkörper darstellen. Die Schallimpulse werden nach Zurücklegen der vorgegebenen Messstrecke 4 im zu untersuchenden Fluid 1 vom Schallimpulsempfänger 3 registriert, wobei der Ersteinsatz Tof1, Tof2 (Fig. 2) des ersten nach Zurücklegen der Messstrecke 4 empfangenen Pulses ermittelt und die Laufzeit des ersten empfangenen Schallimpulses im zu untersuchenden Fluid 1 von der Auswerteeinheit 6 bestimmt wird.

Fig. 2 zeigt ein Beispiel eines Empfangssignals in einem zu untersuchenden Fluid 1, wobei die Signalintensität I in willkürlichen Einheiten [a. u.] auf der y-Achse gegen die Laufzeit t in µs auf der x-Achse aufgetragen ist. Als Laufzeit des Schallimpulses wird diejenige Zeitspanne betrachtet, die zwischen dem Anregungszeitpunkt T₀, zu dem der Schallimpulsgeber 2 einen Schallimpuls aussendet, und dem Ersteinsatz Tof1, zu dem der Schallimpulsempfänger 3 den ersten nach Zurücklegen der Messstrecke 4 empfangenen Schallimpuls registriert, verstreicht.

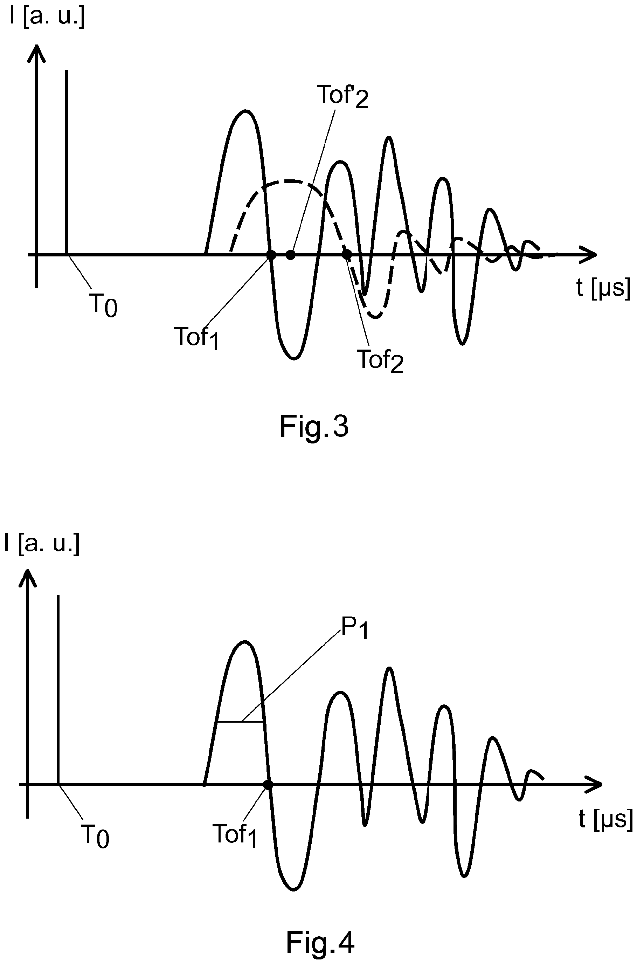

Als Ersteinsatz Tof1, Tof2 wird dabei beispielsweise der erste Nulldurchgang des ersten am Schallimpulsempfänger 3 empfangenen Schallimpulses festgelegt, der nach dem ersten registrierten Maximum des Schallimpulses registriert wird, wie dies in den Fig. 3 bis 5 gezeigt ist. Bei dieser Festlegung ist eine besonders exakte Bestimmung des Ersteinsatzes am Schallimpulsempfänger 3 möglich.

Alternativ dazu kann als Ersteinsatz Tof1, Tof2 auch das erste registrierte Eintreffen das Schallimpulses am Schallimpulsempfänger 3, oder die Peakposition des ersten Maximums des ersten am Schallimpulsempfänger 3 ankommenden Schallimpulses festgelegt werden.

Prinzipiell ist aus dieser Laufzeit des Schallimpulses und der Länge der Messstrecke 4 die Schallgeschwindigkeit des zu untersuchenden Fluids 1 errechenbar. Die tatsächliche Laufzeit wird dabei durch den ersten Anstieg des Signals am Empfänger charakterisiert. Wird wie bei dem in Fig. 3 schematisch dargestellten Ausführungsbeispiel der erste Nulldurchgang Tof1 als Ersteinsatz für die Auswertung gewählt, so wird die Laufzeit noch um den Betrag der Pulsweite P1 (siehe Fig. 4) korrigiert.

Die Schallgeschwindigkeit ergibt sich dabei beispielsweise aus der Länge der Messstrecke 4 dividiert durch die tatsächliche Laufzeit des Schallimpulses. Da das Ansatzsignal des empfangenen Schallimpulses, also der Registrierungsbeginn des Empfangssignals, oft nicht mit ausreichender Genauigkeit bestimmt werden kann, wird als Ersteinsatz Tof1 des ersten empfangenen Schallimpulses der erste registrierte Nulldurchgang des empfangenen Schallimpulses ermittelt.

Die Schallgeschwindigkeit bei der Ausbreitung von Schallimpulsen in einem Fluid ist eine Stoffkenngröße und kann für die Stoffcharakterisierung eingesetzt werden. Bei vielen flüssigen Lösungen und Mischungen ist die Schallgeschwindigkeit direkt proportional zur Konzentration der Komponenten und kann daher vorteilhaft zur Konzentrationsbestimmung in beispielsweise zwei Komponentensystemen verwendet werden. Als weitere Stoffkenngröße kann die Dichte aus einer Bestimmung der Schallgeschwindigkeit unter Zuhilfenahme des Zusammenhangs zwischen der Schallgeschwindigkeit in einem Fluid, dessen Kompressibilität und Dichte ermittelt werden.

Daher ist es zur möglichst genauen Charakterisierung der Stoffkenngrößen eines zu untersuchenden Fluids 1 wünschenswert, die Schallgeschwindigkeit im zu untersuchenden Fluid 1 möglichst exakt zu bestimmen. Beim Durchgang eines Schallimpulses durch das zu untersuchende Fluid 1 erfährt der Schallimpuls eine Dämpfung durch unterschiedliche Prozesse, die eine Energiedissipation bewirken. Die Frequenzzusammensetzung des Schallimpulses wird durch das Fluid 1 und die durchlaufenen Grenzflächen verändert, während hohe Viskositäten η die Dämpfung erhöhen und somit eine Änderung der Frequenzzusammensetzung verstärken.

Der am Schallimpulsempfänger 3 ankommende Schallimpuls ist daher eine Überlagerung aus verschiedenen Schallphasengeschwindigkeiten bei verschiedenen Frequenzen mit unterschiedlichen Amplituden, der nicht vollständig aufgenommen und analysiert werden können.

Fig. 3 zeigt schematisch empfangene Schallimpulse für das in Fig. 2 dargestellte zu untersuchende Fluid 1 mit einem weiteren Fluid mit geringerer Schallgeschwindigkeit und größerer Viskosität η bzw. größerer Dämpfung. Die Signalintensität I ist dabei in willkürlichen Einheiten [a. u.] auf der y-Achse gegen die Laufzeit t in µs auf der x-Achse aufgetragen. Die geringere Schallgeschwindigkeit des zweiten Fluids äußert sich in einem späteren Ansetzen des Antwortsignals und einem zeitlich später erfolgenden Ersteinsatz Tof2, während sich die größere Viskosität η bzw. größere Dämpfung im Vergleich zum zu untersuchenden Fluid 1 in einer geringeren Signalamplitude niederschlägt.

Die Gruppengeschwindigkeit, also die Überlagerung aus verschiedenen Schallphasengeschwindigkeiten viskoser Medien, ist weiters von der Frequenz des Schallimpulsgebers 2 abhängig. Der derart entstehende Messfehler bei der Ermittlung der Schalllaufzeit bzw. der Schallgeschwindigkeit ist besonders bei Messzellen 5 mit einer Länge der Messtrecke 4 kleiner als 1 cm, da bei derart kurzen Messstrecken 4 eine vollständige Auswertung des am Schallimpulsempfänger 3 ankommenden Empfangssignals mehr möglich ist. Der auftretende Messfehler ist weiters bei hohen Viskositäten des zu untersuchenden Fluids 1 von größer als 1000 mPa·s besonders signifikant.

Je kürzer die Messstrecke ausgestaltet ist, desto rascher muss auch die Auswerteelektronik schalten bzw. aufnehmen können. Die derzeit zur Verfügung stehenden Auswerteelektroniken besitzen zu geringe Abtastfrequenzen und erlauben für kleine Laufstrecken keine vollständige Aufnahme und Auswertung des Frequenzspektrums.

Erstaunlicherweise kann trotz unterschiedlicher Effekte im Fluid, die zur Dämpfung und Verbreiterung der ankommenden Schallsignale führen, die Viskosität η hier in erster Näherung zur Korrektur herangezogen werden und die Schallgeschwindigkeit über eine einfache Korrekturtabelle bzw. Korrekturfunktion, die aus der Bestimmung einzelner Werte für Fluide bekannter Viskosität η (und ggf. Schallgeschwindigkeit) herangezogen werden.

Wird die gemessene Laufzeit des Schallimpulses zwischen dem Zeitpunkt der Aussendung des Schallimpulses T₀ und dem registrierten Ersteinsatz Tof2 über beispielsweise eine Justierung oder Kalibriermessung der bekannten Schallgeschwindigkeit für das Fluid zugeordnet, so ist zu in Fig. 3 erkennen, dass im Fall eines stark gedämpften Schallimpulses bzw. Empfangssignals der Ersteinsatz Tof2 gegenüber des tatsächlichen Ersteinsatzes Tof'2 abweicht. Daraus ist ersichtlich, dass der gemessene Ersteinsatz Tof2 im Vergleich zum tatsächlichen Ersteinsatz Tof'2 um eine Größe ΔTof abweicht. Die Stärke der Ersteinsatzabweichung ΔTof ist somit abhängig von der Viskosität η, aber auch beispielsweise von der Temperatur.

Bei aus dem Stand der Technik bekannten Vorrichtungen und Verfahren zur Ermittlung eines Schallgeschwindigkeitswerts in einem zu untersuchen Fluid 1 ist diese viskositätsbedingte Dämpfung nicht berücksichtigt.

Bei einer erfindungsgemäßen Vorrichtung 10 bzw. einem erfindungsgemäßen Verfahren zur Ermittlung eines korrigierten Werts für die viskositätsabhängige Schallgeschwindigkeit in einem zu untersuchenden Fluid 1 wird der durch die Viskosität η entstehende Messfehler bei der Bestimmung der Schalllaufzeit korrigiert. Dabei wird beispielsweise eine erste Korrekturtabelle für den Zusammenhang zwischen der Viskosität η und der Ersteinsatzabweichung ΔTof des ersten empfangenen Schallimpulses für Fluide mit jeweils bekannter Viskosität η bereitgestellt und ein Viskositätswert η für das zu untersuchende Fluid 1 vorgegeben oder ermittelt.

Anschließend wird eine Korrektur hinsichtlich der Viskosität η des bei der Vermessung erhaltenen Ersteinsatzes Tof1, Tof2 des ersten empfangenen Schallimpulses für das zu untersuchende Fluid 1 vorgenommen, wozu der vorgegebene oder ermittelte Viskositätswert η und die erste Korrekturtabelle verwendet werden. Aus der korrigierten Laufzeit des ersten empfangenen Schallimpulses und der Länge der vorgegebenen Messstrecke 4 wird schließlich die Schallgeschwindigkeit im zu untersuchenden Fluid 1 bestimmt.

Somit ist auch eine exakte Auswertung der Schalllaufzeit bzw. der Schallgeschwindigkeit in Messzellen 5 mit kurzen Messstrecken 4, deren Länge kürzer als 1 cm ist, gewährleistet, da bei einer derart kleinen Baugröße der Messzelle 5 keine vollständige Auswertung des Empfangssignals mittels beispielweise einer Fouriertransformation des am Schallimpulsempfänger 3 ankommenden Schallimpulses bzw. Empfangssignals mehr durchgeführt werden kann.

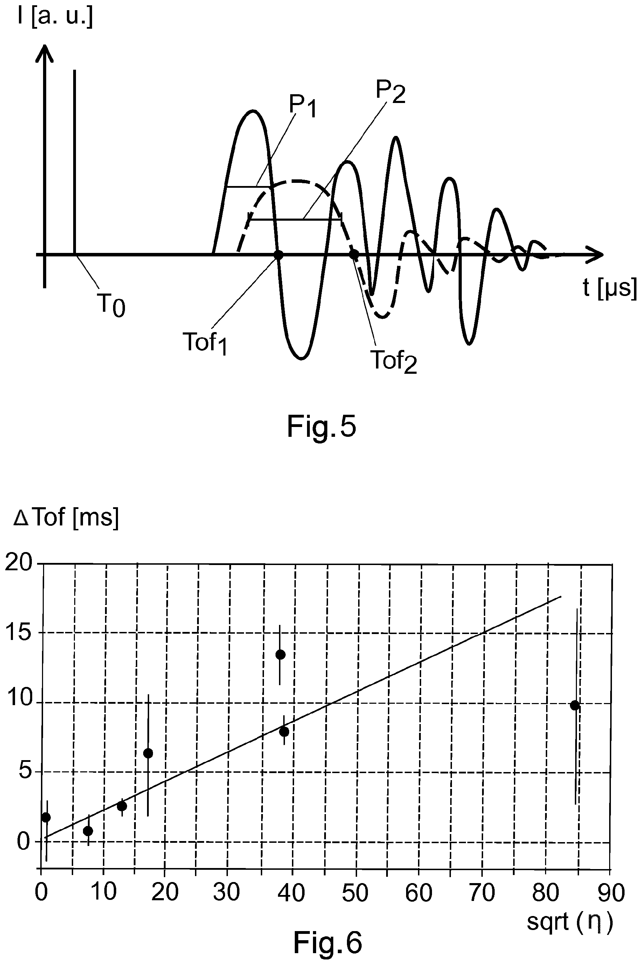

Fig. 6 zeigt ein Beispiel einer ersten Korrekturtabelle für den Zusammenhang zwischen der Viskosität η und der Ersteinsatzabweichung ΔTof des ersten empfangenen Schallimpulses. In Fig. 6 ist dabei die Ersteinsatzabweichung ΔTof in Millisekunden gegen die Wurzel (sqrt) aus der Viskosität η in mPa·s aufgetragen. Zur Erstellung einer derartigen ersten Korrekturtabelle werden, bevorzugt zumindest sechs, Fluide vermessen und daraus eine Korrektur der Ersteinsatzabweichung ΔTof bestimmt. Die Ersteinsatzabweichung ΔTof ist von der Viskosität η abhängig, sodass für einen bestimmten gemessenen Ersteinsatz Tof1, Tof2 bei einer bestimmten Viskosität η des zu untersuchenden Fluids 1 der zu korrigierende Fehler aus der hinterlegten ersten Korrekturtabelle ableitbar ist.

Für die Erstellung der ersten Kalibriertabelle werden z.B. Justierproben bekannter Schallgeschwindigkeit verwendet. Die für jede der Justierproben gemessene Zeitdauer zwischen dem Zeitpunkt T₀, zu dem der Schallimpulsgeber 2 einen Schallimpuls aussendet, und dem Ersteinsatz Tof1, Tof2, d.h. dem ersten registrierten Nulldurchgang des Empfangssignals am Schallimpulsempfänger 3, wird dabei mit den bekannten Schalllaufzeiten für die Justierproben, beispielsweise Standardlösungen, justiert.

Das bedeutet, dass die aus der Laufzeit des Schallimpulses und der Länge der Messstrecke 4 berechnete Schallgeschwindigkeit mit der bekannten Schallgeschwindigkeit der Justierprobe verglichen wird und eine viskositätsbedingte Ersteinsatzabweichung ΔTof bei der für die Justierprobe bekannten Viskosität η abgeleitet wird.

Somit wird bei einem erfindungsgemäßen Verfahren der ermittelte Ersteinsatz Tof1, Tof2 für die Ermittlung der Schallgeschwindigkeit des zu untersuchenden Fluids 1 um einen viskositätsabhängigen Fehler korrigiert.

Da auch die Temperatur die Ersteinstabweichung ΔTof beeinflusst, kann bei einem erfindungsgemäßen Verfahren optional auch die erste Korrekturtabelle für den Zusammenhang zwischen der Viskosität η und der Ersteinsatzabweichung ΔTof bei verschiedenen Temperaturen bereitgestellt werden.

Die Temperatur des zu untersuchenden Fluids wird dabei während der Vermessung des zu untersuchenden Fluids 1, beispielsweise mittels des Sensors 7, ermittelt und anschließend bei der Korrektur des bei der Vermessung erhaltenen Schallgeschwindigkeitswerts mittels der ersten Korrekturtabelle berücksichtigt.

In diesem Fall werden bei der Erstellung der ersten Korrekturtabelle, vorzugsweise zumindest sechs, Justierproben bei, vorzugsweise zumindest drei, verschiedenen Temperaturen gemessen und daraus eine erste Korrekturtabelle erstellt, in der der viskositäts- und temperaturbedingte Fehler bei der Ermittlung der Ersteinsatzabweichung ΔTof berücksichtigt wird. Somit wird bei der Korrektur des für ein zu untersuchendes Fluid 1 gemessenen Ersteinsatzes Tof1, Tof2 die viskositäts- und temperaturbedingte Verfälschung korrigiert.

Alternativ ist auch eine Modellbildung mit Korrektur des Ersteinsatzes ΔTof kombiniert mit einer Schallgeschwindigkeitsauswertung möglich.

Alternativ kann die Schallgeschwindigkeit in einem zu untersuchenden Fluid 1 aus der Laufzeit des ersten empfangenen Schallimpulses mittels einer ersten Justiertabelle bestimmt bzw. abgeleitet werden. Dazu wird mittels Justiermessungen an Fluiden mit jeweils bekannter Schallgeschwindigkeit und bekannter Viskosität η eine erste Justiertabelle für den Ersteinsatz Tof1, Tof2 des ersten empfangenen Schallimpulses bereitgestellt. Bei der Justiertabelle handelt es sich um eine Zuordnungstabelle in der jeweils der Ersteinsatz Tofi bzw. die Laufzeit eines Fluids i der bekannten Schallgeschwindigkeit des Fluids i zugeordnet ist. Somit kann mithilfe der ersten Justiertabelle, dem für ein zu untersuchendes Fluid 1 ermittelten Ersteinsatz Tof1, Tof2 und der für das zu untersuchende Fluid 1 ermittelten oder vorgegebenen Viskosität η ein korrigierter Wert für die Schallgeschwindigkeit abgeleitet werden.

Der für die Korrektur der Ersteinsatzabweichung ΔTof bzw. die Korrektur der Schallgeschwindigkeit benötigte Viskositätswert η wird für das zu untersuchende Fluid 1 wird bei einer erfindungsgemäßen Vorrichtung 10 bzw. einem erfindungsgemäßen Verfahren vorgegeben oder ermittelt. Bei der in Fig. 1 dargestellten Vorrichtung 10 wird beispielsweise ein bekannter Viskositätswert η oder ein bekannter Wertebereich der Viskosität η für das zu untersuchende Fluid 1 vorgegeben und beispielsweise an der Auswerteeinheit 6 eingegeben.

Alternativ kann eine Datenbank von bekannten Viskositätswerten η oder Wertebereichen der Viskosität η für zu untersuchende Fluide 1 bereitgestellt werden und der Viskositätswert η oder ein bekannter Wertebereich der Viskosität η für das zu untersuchende Fluid 1 in der Datenbank ermittelt werden. Eine derartige Datenbank von bekannten Viskositätswerten η oder Wertebereichen der Viskosität η für verschiedene Fluide kann beispielsweise in der Auswerteeinheit 6 hinterlegt sein.

Alternativ kann der Viskositätswert η für das zu untersuchende Fluid 1 mittels eines Messverfahrens zur Bestimmung der Viskosität η, insbesondere mittels eines Biegeschwingers, ermittelt werden. Dazu wird beispielsweise ein Messgerät zur Bestimmung der Viskosität η mit einer erfindungsgemäßen Vorrichtung 10 kombiniert oder eine weitere Auswerteeinheit eines Messgeräts zur Bestimmung der Viskosität η mit der Auswerteeinheit 6 verbunden, sodass für das zu untersuchende Fluid 1 ermittelte Viskositäts-Messwerte an die Auswerteeinheit 6 der Vorrichtung 10 übertragen werden.

Alternativ kann bei einem erfindungsgemäßen Verfahren bzw. einer erfindungsgemäßen Vorrichtung 10 die Viskosität η für das zu untersuchende Fluid auch näherungsweise direkt aus einer Bestimmung der Pulsbreite des ersten ankommenden Schallimpulses am Schallimpulsempfänger 3 bzw. des Empfangssignals bestimmt werden.

Als Pulsbreite P, P1, P2 des ersten empfangenen Schallimpulses wird dabei nach bekannter und bevorzugter Methode die Halbwertsbreite des ersten eintreffenden Schallpulses ermittelt werden, wie dies in Fig. 4 für das erste zu untersuchende Fluid 1 dargestellt ist. Dabei ist in Fig. 4 die Signalintensität I in willkürlichen Einheiten [a. u.] auf der y-Achse gegen die Laufzeit t in µs auf der x-Achse aufgetragen. Die Halbwertsbreite gibt dabei die volle Breite des am Schallimpulsempfänger 3 empfangenen Signals auf halber Höhe des maximalen Ausschlags an. Dies bietet den Vorteil, dass eine exakte Auswertung des schwierig zu bestimmenden Ansatzsignals, d.h. dem Zeitpunkt des ersten Empfangens des Schallimpulses, entfällt und auf somit einfache Weise eine zweite Justiertabelle erstellt werden kann, die den werksseitig ermittelten Zusammenhang zwischen der Viskosität η und der Pulsbreite P, P1, P2 angibt.

Alternativ kann als Pulsbreite P, P1, P2 des ersten empfangenen Schallimpulses die Zeitspanne zwischen dem Ansatzsignal, d.h. dem Zeitpunkt des ersten Empfangens des Schallimpulses, und dem ersten registrierten Nulldurchgang des Schallimpulses ermittelt werden.

Die Pulsbreite P, P1, P2 ist dabei abhängig von der Dämpfung durch das zu untersuchende Fluid 1, der Anregefrequenz des Schallimpulsgebers 2, der Temperatur und der Viskosität η des zu untersuchenden Fluids 1. Dabei sind die Anregefrequenz des Schallimpulsgebers 2 sowie die Länge der Messstrecke 4 konstant und als einzige variable Größe ist die Viskosität η zu betrachten, wird auch die Temperatur als konstant angenommen.

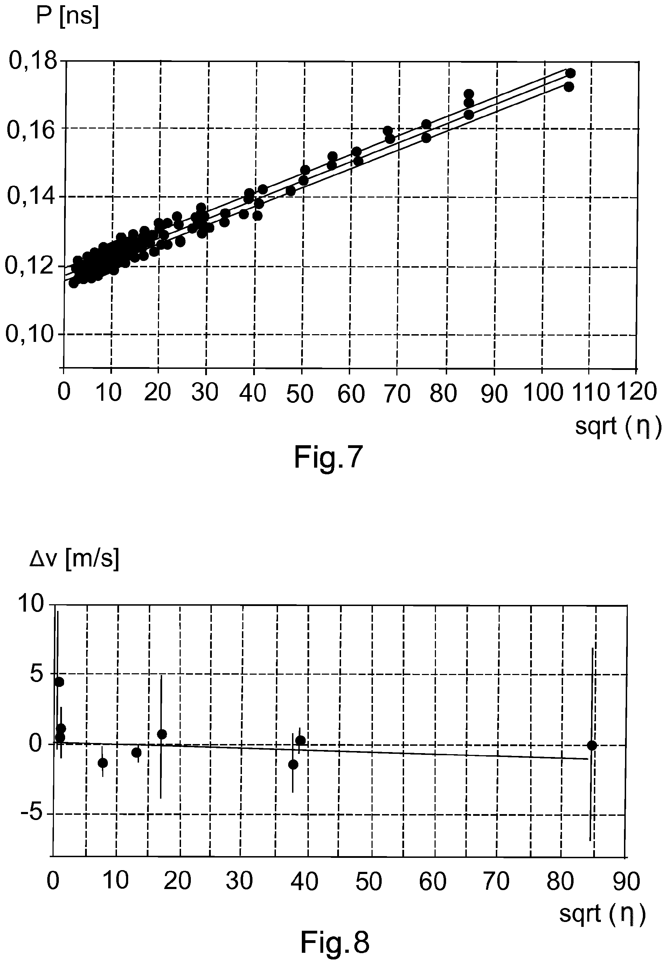

Fig. 7 zeigt den Zusammenhang zwischen der Pulsbreite P in Nanosekunden und der Wurzel (sqrt) aus der Viskosität η. Dabei ist zu erkennen, dass der am Schallimpulsempfänger 3 ankommende Schallimpuls bei gleichem Anregeimpuls des Schallimpulsgebers 2 bei Ausbreitung in höher viskosen Medien stärker gedämpft ist, als in geringer viskosen. Dieser Umstand führt einerseits zu einer Abnahme der Signalamplitude und andererseits zu einer Zunahme der Pulsbreite P, P1, P2.

Dies ist auch in Fig. 5 zu erkennen, wo die Signalintensität I in willkürlichen Einheiten [a. u.] auf der y-Achse gegen die Laufzeit t in µs auf der x-Achse aufgetragen ist und die Pulsbreite P1 des ersten registrierten Schallimpulses des zu untersuchenden Fluids 1 kleiner und die Signalamplitude höher sind, als die Pulsbreite P2 und die Signalamplitude des weiteren Fluids.

Zur Bestimmung der Viskosität η aus der Pulsbreite P, P1, P2 wird eine zweite Justiertabelle für den Zusammenhang zwischen der Viskosität und der Pulsbreite P, P1, P2 des ersten nach Zurücklegen der Messstrecke 4 empfangenen Schallimpulses für eine Vielzahl an Fluiden mit jeweils bekannter Viskosität η bereitgestellt. Ein Beispiel einer derartigen zweiten Justiertabelle bzw. Justierfunktion ist in Fig. 7 dargestellt.

Die Pulsbreite P des ersten nach Zurücklegen der Messstrecke 4 empfangenen Schallimpulses in dem zu untersuchenden Fluid 1 wird anschließend ermittelt und der Viskositätswert des zu untersuchenden Fluids 1 mittels der zweiten Justiertabelle bzw. Justierfunktion und der ermittelten Pulsbreite P des ersten empfangenen Schallimpulses bestimmt.

Wie in Fig. 7 ersichtlich ist, verändert sich die Pulsbreite P in Abhängigkeit von der Viskosität η und steigt mit zunehmender Viskosität η. Die Pulsbreitenänderung verursacht eine Ersteinsatzabweichung ΔTof. Diese Ersteinsatzabweichung ΔTof kann bei Kenntnis der Viskosität η, wie vorstehend beschrieben, für eine bestimmte Messzellenart mit bekannter Messstrecke 4 und einer konstanten Anregefrequenz des Schallimpulsgebers 2 beispielsweise unter Heranziehung der Korrekturtabelle korrigiert werden.

Gegebenenfalls können die beiden Schritte, d.h. die Ermittlung der Viskosität η des zu untersuchenden Fluids mittels der Pulsbreite P, P1, P2 und die Bestimmung der Ersteinstabweichung ΔTof basierend auf der ermittelten Viskosität η des zu untersuchenden Fluids 1, auch in einer einzigen gemeinsamen Korrekturtabelle bzw. als gemeinsame Korrekturfunktion hinterlegt werden. Eine derartige gemeinsame Korrekturtabelle bzw. Korrekturfunktion liefert in einem Auswerteschritt ausgehend von der für das zu untersuchende Fluid ermittelten Pulsbreite P, P1, P2 die viskositätsbedingte Ersteinstabweichung ΔTof, die bei der Ermittlung der Schallgeschwindigkeit des zu untersuchenden Fluids zu berücksichtigen ist.

Zur Erstellung dieser gemeinsamen Korrekturtabelle werden eine Vielzahl an Korrekturmessungen, vorzugsweise an zumindest sechs, Proben mit jeweils bekannter Viskosität η und Schallgeschwindigkeit durchgeführt. Zur Beschreibung des Zusammenhangs zwischen der Ersteinsatzabweichung ΔTof und der aus der Pulsbreite P, P1, P2 abgeleiteten Viskosität η wird dabei im Regelfall ein Polynom höherer Ordnung benötigt. Bevorzugt sind beispielsweise zur Beschreibung mittels eines Polynoms zweiter Ordnung, zumindest 6 oder mehr Proben, bekannter Viskosität η und Schallgeschwindigkeit nötig.

Alternativ kann eine gemeinsame Korrekturtabelle bzw. Korrekturfunktion aus der ersten Justiertabelle, die den Ersteinsatz Tof1, Tof2 des ersten empfangenen Schallimpulses für Fluide mit jeweils bekannter Schallgeschwindigkeit und bekannter Viskosität η angibt, und der zweiten Justiertabelle, die den Zusammenhang zwischen der Viskosität η und der Pulsbreite P; P1, P2 für Fluide mit jeweils bekannter Viskosität η darstellt, erstellt werden.

Somit kann auf einfache Weise mittels der gemeinsamen Korrekturtabelle und dem für das zu untersuchenden Fluid 1 bestimmte Ersteinsatz Tof1, Tof2 des ersten empfangenen Schallimpulses und der ermittelten Pulsbreite P; P1, P2 ein korrigierter Wert für die viskositätsabhängige Schallgeschwindigkeit bestimmt werden.

Gegebenenfalls kann auch die Temperatur der Proben mit entsprechender Polynombildung und Justiermessung in der gemeinsamen Korrekturtabelle bzw. der gemeinsamen Korrekturfunktion Berücksichtigung finden.

Optional kann die Temperatur während der Vermessung des zu untersuchenden Fluids 1 gemessen und bei der Korrektur des Ersteinsatzes Tof1, Tof2 berücksichtigt werden. Die Ersteinsatzkorrektur bzw. die Korrektur der bestimmten Laufzeit für das zu untersuchende Fluid 1 ist somit viskositäts- und temperaturabhängig, wobei beide Größen durch Messung oder bekannte Referenzwerte für die Auswertung der Schallgeschwindigkeit zur Verfügung stehen.

Fig. 8 zeigt eine Darstellung der Schallgeschwindigkeitsabweichung Δv in Meter pro Sekunde aufgetragen gegen die Wurzel (sqrt) aus der Viskosität η für zu untersuchende Fluide 1 mit bekannten Schallgeschwindigkeiten, für die bei der Auswertung der Schallgeschwindigkeit eine Korrektur basierend auf der Viskosität η vorgenommen wurde. Die Viskosität η wurde dabei aus der Pulsbreite P des ersten nach Zurücklegen der Messstrecke 4 empfangenen Schallimpulses für das jeweilige Fluid bestimmt. In Fig. 8 ist zu erkennen, dass eine Berücksichtigung der viskositätsbedingten Ersteinsatzabweichung eine signifikante Verbesserung der ermittelten Messwerte für die Schallgeschwindigkeit der zu untersuchenden Fluide 1 ergibt.

Eine erfindungsgemäße Vorrichtung 10 kann alternativ auch derart ausgestaltet sein, dass der Schallimpulsgeber 2 und der Schallimpulsempfänger 3 als ein kombinierter Schallimpulsgeber/-empfänger ausgebildet sind, wobei der Schallimpulsgeber/-empfänger an einem Ende der Messstrecke 4 angeordnet ist. Am anderen Ende der Messstrecke 4, dem Schallimpulsgeber/-empfänger gegenüberliegend, ist eine schallreflektierende Grenzfläche angeordnet und der Schallimpulsgeber/-empfänger ist durch die Registrierung von ankommenden Schallimpulsen zur Aussendung von Schallimpulsen anregbar. D.h., dass die vom kombinierten Schallimpulsgeber/-empfänger ausgesendeten Schallimpulse auf die Grenzfläche Festkörper-Fluid auftreffen, reflektiert werden, anschließend vom kombinierten Schallimpulsgeber/-empfänger registriert werden und nach der Registrierung ein neuer Schallimpuls ausgesendet wird. Als kombinierter Schallimpulsgeber/-empfänger eignen sich beispielsweise kombinierte piezoelektrische Ultraschallgeber-/Empfänger.

Somit wird nur der an der Grenzfläche reflektierte Anteil des Schallimpulses für die Auswertung der Schallgeschwindigkeit herangezogen. Vorteile einer derartig ausgestalteten Vorrichtung 10 sind, dass der Schallimpuls sich nur in einem zu untersuchenden Fluid 1 ausbreitet und keine Schichtfolge aus Festkörper-Fluid-Festkörper durchquert.

Dadurch werden die mit einer derartigen Vorrichtung 10 bestimmten Schalllaufzeiten bzw. Schallgeschwindigkeiten durch hohe Auflösung und Wiederholbarkeit gekennzeichnet und die Messung ist sofort auf Änderungen der Konzentration oder der Temperatur empfindlich, sodass driftfreie Messresultate in Echtzeit erhältlich sind. Weiters ist das Design einer derartigen Messzelle 5 robust und benötigt weniger bewegte Teile. Eine derartige Ausgestaltung einer erfindungsgemäßen Vorrichtung 10 ist besonders für stark absorbierende zu untersuchende Fluide 1 geeignet, da hier Mehrfachreflexionen stark abgeschwächt auftreten und die Bestimmung des Ersteinsatzes Tof1, Tof2 beim zu untersuchenden Fluids 1 nicht stören.

Alternativ kann jede erfindungsgemäße Vorrichtung 10 auch thermostatisiert ausgeführt sein, sodass die Temperatur während der Messung konstant bleibt und eine Berücksichtigung der Temperatur bei der Korrektur der viskositätsabhängigen Schallgeschwindigkeit entfällt.

## Patentansprüche

1. Verfahren zur Ermittlung eines korrigierten Werts für die viskositätsabhängige Schallgeschwindigkeit in einem zu untersuchenden Fluid (1),
- wobei Schallimpulse erzeugt und an das zu untersuchende Fluid (1) übertragen werden,
- wobei die Schallimpulse nach Zurücklegen einer vorgegebenen Messstrecke (4) in dem zu untersuchenden Fluid (1) registriert werden,
- wobei der Ersteinsatz (Tof1, Tof2) des ersten nach Zurücklegen der Messstrecke (4) empfangenen Schallimpulses ermittelt und die Laufzeit des ersten empfangenen Schallimpulses in dem zu untersuchenden Fluid (1) bestimmt wird,
**dadurch gekennzeichnet, dass**
- ein Viskositätswert (η) für das zu untersuchende Fluid (1) vorgegeben oder ermittelt wird und
- die Laufzeit des ersten empfangenen Schallimpulses und der Viskositätswert (η) zur Ermittlung der Schallgeschwindigkeit in dem zu untersuchenden Fluid (1) herangezogen werden, sodass derart der durch die Viskosität des zu untersuchenden Fluids bedingte Messfehler bei der Bestimmung der Laufzeit des ersten empfangenen Schallimpulses in dem zu untersuchenden Fluid (1) korrigiert wird.

2. Verfahren nach Anspruch 1, **dadurch gekennzeichnet, dass**
- eine erste Korrekturtabelle für den Zusammenhang zwischen der Viskosität (η) und der Ersteinsatzabweichung (ΔTof) des ersten empfangenen Schallimpulses für Fluide mit jeweils bekannter Viskosität (η) bereitgestellt wird,
- eine Korrektur hinsichtlich der Viskosität (η) des bei der Vermessung erhaltenen Ersteinsatzes des ersten empfangenen Schallimpulses für das zu untersuchende Fluid (1) mittels der ersten Korrekturtabelle und dem vorgegebenen oder ermittelten Viskositätswert (η) vorgenommen wird und
- die Schallgeschwindigkeit in dem zu untersuchenden Fluid (1) durch Berechnung aus der korrigierten Laufzeit des ersten empfangenen Schallimpulses und der Länge der vorgegebenen Messstrecke (4) bestimmt wird.

3. Verfahren nach Anspruch 1, **dadurch gekennzeichnet, dass**
- eine erste Justiertabelle für den Ersteinsatz (Tof1, Tof2) des ersten empfangenen Schallimpulses für Fluide mit jeweils bekannter Schallgeschwindigkeit und bekannter Viskosität (η) bereitgestellt wird und
- der Ersteinsatz (Tof1, Tof2) des ersten empfangenen Schallimpulses und der vorgegebene oder ermittelte Viskositätswert (η) zur Bestimmung der Schallgeschwindigkeit in dem zu untersuchenden Fluid (1) mittels der ersten Justiertabelle herangezogen werden.

4. Verfahren nach einem der Ansprüche 1 bis 3, **dadurch gekennzeichnet, dass** als Ersteinsatz (Tof1, Tof2) des ersten empfangenen Schallimpulses
- der erste Nulldurchgang des Schallimpulses nach dem ersten registrierten Maximum des Schallimpulses, oder
- das erste registrierte Eintreffen das Schallimpulses, oder
- die Peakposition des ersten Maximums des ersten registrierten Schallimpulses ermittelt wird.

5. Verfahren nach einem der Ansprüche 1 bis 4, **dadurch gekennzeichnet, dass**
- ein bekannter Viskositätswert (η) oder ein bekannter Wertebereich der Viskosität (η) für das zu untersuchende Fluid (1) vorgegeben wird oder
- eine Datenbank von bekannten Viskositätswerten (η) oder Wertebereichen der Viskosität (η) für Fluide bereitgestellt wird und der Viskositätswert (η) oder ein bekannter Wertebereich der Viskosität (η) für das zu untersuchende Fluid (1) in der Datenbank ermittelt wird.

6. Verfahren nach einem der Ansprüche 1 bis 4, **dadurch gekennzeichnet, dass** der Viskositätswert (η) für das zu untersuchende Fluid (1) mittels eines Messverfahrens zur Bestimmung der Viskosität (η), insbesondere mittels eines Biegeschwingers, ermittelt wird.

7. Verfahren nach nach Anspruch 3,
**dadurch gekennzeichnet, dass**
- eine zweite Justiertabelle für den Zusammenhang zwischen der Viskosität (η) und der Pulsbreite (P; P1, P2) des ersten nach Zurücklegen der Messstrecke (4) empfangenen Schallimpulses für Fluide mit jeweils bekannter Viskosität (η) bereitgestellt wird,
- die Pulsbreite (P; P1, P2) des ersten nach Zurücklegen der Messstrecke (4) empfangenen Schallimpulses in dem zu untersuchenden Fluid (1) ermittelt wird und
- der Viskositätswert (η) des zu untersuchenden Fluids (1) mittels der zweiten Justiertabelle und der ermittelten Pulsbreite (P; P1, P2) des ersten empfangenen Schallimpulses bestimmt wird.

8. Verfahren nach Anspruch 7, **dadurch gekennzeichnet, dass** als Pulsbreite (P; P1, P2) des ersten empfangenen Schallimpulses
- die Zeitspanne zwischen dem Zeitpunkt des ersten Empfangens des Schallimpulses und dem ersten registrierten Nulldurchgang des Schallimpulses oder
- die Halbwertsbreite des ersten empfangenen Schallimpulses ermittelt wird.

9. Verfahren nach Anspruch 2 oder 3,
**dadurch gekennzeichnet, dass**
- die erste Korrekturtabelle für den Zusammenhang zwischen der Viskosität (η) und der Ersteinsatzabweichung (ΔTof) oder die erste Justiertabelle für den Ersteinsatz (Tof1, Tof2) des ersten empfangenen Schallimpulses für Fluide mit jeweils bekannter Schallgeschwindigkeit und bekannter Viskosität (η) bei verschiedenen Temperaturen bereitgestellt wird,
- die Temperatur des zu untersuchenden Fluids (1) während der Vermessung ermittelt wird und
- die Temperatur bei der Korrektur des bei der Vermessung erhaltenen Schallgeschwindigkeitswerts mittels der ersten Korrekturtabelle oder der ersten Justiertabelle berücksichtigt wird.

10. Verfahren nach einem der Ansprüche 7 bis 8,
**dadurch gekennzeichnet, dass**
- eine erste Korrekturtabelle für den Zusammenhang zwischen der Viskosität (η) und der Ersteinsatzabweichung (ΔTof) und die zweite Justiertabelle für den Zusammenhang zwischen der Viskosität (η) und der Pulsbreite (P; P1, P2) zur Erstellung einer gemeinsamen Korrekturtabelle herangezogen werden, wobei
- die Ersteinsatzabweichung (ΔTof) mittels der für das zu untersuchende Fluid (1) ermittelten Pulsbreite (P; P1, P2) und der gemeinsamen Korrekturtabelle ermittelt wird und
- Schallgeschwindigkeit in dem zu untersuchenden Fluid (1) durch Berechnung aus der korrigierten Laufzeit des ersten empfangenen Schallimpulses und der Länge der vorgegebenen Messstrecke (4) bestimmt wird oder
- die erste Justiertabelle für den Ersteinsatz (Tof1, Tof2) des ersten empfangenen Schallimpulses für Fluide mit jeweils bekannter Schallgeschwindigkeit und bekannter Viskosität (η) und die zweite Justiertabelle für den Zusammenhang zwischen der Viskosität (η) und der Pulsbreite (P; P1, P2) für Fluide mit jeweils bekannter Viskosität (η) zur Erstellung einer gemeinsamen Korrekturtabelle herangezogen werden,
- wobei der für das zu untersuchenden Fluid (1) bestimmte Ersteinsatz (Tof1, Tof2) des ersten empfangenen Schallimpulses und die für das zu untersuchenden Fluid (1) bestimmte Pulsbreite (P; P1, P2) zur Ermittlung der Schallgeschwindigkeit mittels der gemeinsamen Korrekturtabelle herangezogen werden.

11. Verfahren nach einem der vorangehenden Ansprüche, **dadurch gekennzeichnet, dass** die Viskosität (η) des zu untersuchenden Fluids größer als 1000 mPa·s ist und/oder dass die Länge der Messstrecke (4) kürzer als 1 cm ist.

12. Vorrichtung zur Ermittlung eines korrigierten Werts für die viskositätsabhängige Schallgeschwindigkeit in einem zu untersuchenden Fluid (1) umfassend
- einen Schallimpulsgeber (2) zur Aussendung von Schallimpulsen und einen Schallimpulsempfänger (3) zur Registrierung von ankommenden Schallimpulsen,
wobei zwischen dem Schallimpulsgeber und dem Schallimpulsempfänger eine vorgegebene Messstrecke (4) in einer Messzelle (5) angeordnet ist und
- eine mit dem Schallimpulsgeber (2) und dem Schallimpulsempfänger (3) verbundene Auswerteeinheit (6), **dadurch gekennzeichnet, dass** der Schallimpulsgeber, der Schallimpulsempfänger und die Auswerteeinheit dazu ausgebildet sind, ein Verfahren nach einem der Ansprüche 1 bis 5, 7, 8 oder 10 durchzuführen.

13. Vorrichtung nach Anspruch 12 **dadurch gekennzeichnet, dass** ein mit der Auswerteeinheit (6) verbundener Sensor (7) zur Bestimmung der Temperatur des zu untersuchenden Fluids (1) vorgesehen ist, und wobei ferner die Auswerteeinheit alternativ dazu ausgebildet ist, ein Verfahren nach Anspruch 9 durchzuführen.

14. Vorrichtung nach Anspruch 12 oder 13 **dadurch gekennzeichnet, dass**
- der Schallimpulsgeber (2) und der Schallimpulsempfänger (3) als ein kombinierter Schallimpulsgeber/-empfänger ausgebildet sind, der an einem Ende der Messstrecke (4) angeordnet ist,
- am anderen Ende der Messstrecke (4) dem Schallimpulsgeber/-empfänger gegenüberliegend eine schallreflektierende Grenzfläche angeordnet ist und
- der Schallimpulsgeber/-empfänger durch die Registrierung von ankommenden Schallimpulsen zur Aussendung von Schallimpulsen anregbar ist.

## Claims

1. Method for ascertaining a corrected value for the viscosity-dependent acoustic velocity in a fluid (1) to be examined,
- wherein sound pulses are generated and transmitted to the fluid (1) to be examined,
- wherein the sound pulses are registered after covering a predetermined measuring distance (4) in the fluid (1) to be examined,
- wherein the first arrival (Tofl, Tof2) of the first sound pulse received after covering the measuring distance (4) is ascertained and the transit time of the first received sound pulse is determined in the fluid (1) to be examined,
**characterised in that**
- a viscosity value (η) for the fluid (1) to be examined is predetermined or ascertained and
- the transit time of the first received sound pulse and the viscosity value (η) are used to ascertain the acoustic velocity in the fluid (1) to be examined, such that the measurement error caused by the viscosity of the fluid to be examined is corrected in this way when determining the transit time of the first received sound pulse in the fluid (1) to be examined.

2. Method according to claim 1, **characterised in that**
- a first correction table for the relationship between the viscosity (η) and the first arrival deviation (ΔTof) of the first received sound pulse for fluids each having a known viscosity (η) is provided,
- a correction with regard to the viscosity (η) of the first arrival of the first received sound pulse, which first arrival is obtained during the measurement, is made for the fluid (1) to be examined by means of the first correction table and the predetermined or ascertained viscosity value (η) and
- the acoustic velocity in the fluid (1) to be examined is determined by calculation from the corrected transit time of the first received sound pulse and the length of the predetermined measuring distance (4).

3. Method according to claim 1, **characterised in that**
- a first calibration table for the first arrival (Tofl, Tof2) of the first received sound pulse for fluids each having a known acoustic velocity and known viscosity (η) is provided and
- the first arrival (Tofl, Tof2) of the first received sound pulse and the predetermined or ascertained viscosity value (η) are used to determine the acoustic velocity in the fluid (1) to be examined by means of the first calibration table.

4. Method according to any of claims 1 to 3, **characterised in that** as the first arrival (Tofl, Tof2) of the first received sound pulse
- the first zero crossing of the sound pulse after the first registered maximum of the sound pulse, or
- the first registered incidence of the sound pulse, or
- the peak position of the first maximum of the first registered sound pulse is ascertained.

5. Method according to any of claims 1 to 4, **characterised in that**
- a known viscosity value (η) or a known value range of the viscosity (η) for the fluid (1) to be examined is predetermined or
- a database of known viscosity values (η) or value ranges of the viscosity (η) for fluids is provided and the viscosity value (η) or a known value range of the viscosity (η) for the fluid (1) to be examined is ascertained in the database.

6. Method according to any of claims 1 to 4, **characterised in that** the viscosity value (η) for the fluid (1) to be examined is ascertained by means of a measurement method for determining the viscosity (η), in particular by means of a flexural resonator.

7. Method according to claim 3, **characterised in that**
- a second calibration table for the relationship between the viscosity (η) and the pulse width (P; P1, P2) of the first sound pulse received after covering the measuring distance (4) is provided for fluids each having a known viscosity (η),
- the pulse width (P; P1, P2) of the first sound pulse received after covering the measuring distance (4) in the fluid (1) to be examined is ascertained and
- the viscosity value (η) of the fluid (1) to be examined is determined by means of the second calibration table and the ascertained pulse width (P; P1, P2) of the first received sound pulse.

8. Method according to claim 7, **characterised in that** as the pulse width (P; P1, P2) of the first received sound pulse
- the time period between the time of first receiving the sound pulse and the first registered zero crossing of the sound pulse or
- the full width at half maximum of the first received sound pulse is ascertained.

9. Method according to claim 2 or 3, **characterised in that**
- the first correction table for the relationship between the viscosity (η) and the first arrival deviation (ΔTof), or the first calibration table for the first arrival (Tofl, Tof2) of the first received sound pulse for fluids each having a known acoustic velocity and known viscosity (η) at different temperatures is provided,
- the temperature of the fluid (1) to be examined is ascertained during measurement and
- the temperature is taken into account, when correcting the acoustic velocity value obtained during the measurement, by means of the first correction table or the first calibration table.

10. Method according to any of claims 7 to 8, **characterised in that**
- a first correction table for the relationship between the viscosity (η) and the first arrival deviation (ΔTof) and the second calibration table for the relationship between the viscosity (η) and the pulse width (P; P1, P2) are used to create a common correction table, wherein
- the first arrival deviation (ΔTof) is ascertained by means of the pulse width (P; P1, P2) ascertained for the fluid (1) to be examined and by means of the common correction table and
- acoustic velocity in the fluid (1) to be examined is determined by calculation from the corrected transit time of the first received sound pulse and the length of the predetermined measuring distance (4) or
- the first calibration table for the first arrival (Tofl, Tof2) of the first received sound pulse for fluids each having a known acoustic velocity and known viscosity (η) and the second calibration table for the relationship between the viscosity (η) and the pulse width (P; P1, P2) for fluids each having a known viscosity (η) are used to create a common correction table,
- wherein the first arrival (Tofl, Tof2) of the first received sound pulse, which first arrival is determined for the fluid (1) to be examined, and the pulse width (P; P1, P2) determined for the fluid (1) to be examined are used to ascertain the acoustic velocity by means of the common correction table.

11. Method according to any of the preceding claims, **characterised in that**
- the viscosity (η) of the fluid to be examined is greater than 1000 mPa.s and/or **in that** the length of the measuring distance (4) is less than 1 cm.

12. Device for ascertaining a corrected value for the viscosity-dependent acoustic velocity in a fluid (1) to be examined, comprising
- a sound pulse generator (2) for emitting sound pulses and a sound pulse receiver (3) for registering incoming sound pulses, wherein a predetermined measuring distance (4) is arranged in a measuring cell (5) between the sound pulse generator and the sound pulse receiver and
- an evaluation unit (6) connected to the sound pulse generator (2) and to the sound pulse receiver (3),
**characterised in that**
the sound pulse generator, the sound pulse receiver and
the evaluation unit are configured to carry out a method according to any of claims 1 to 5, 7, 8 or 10.

13. Device according to claim 12, **characterised in that** a sensor (7) connected to the evaluation unit (6) is provided for determining the temperature of the fluid (1) to be examined, and wherein, furthermore, the evaluation unit is alternatively configured to carry out a method according to claim 9.

14. Device according to claim 12 or 13, **characterised in that**
- the sound pulse generator (2) and the sound pulse receiver (3) are designed as a combined sound pulse generator/receiver arranged at one end of the measuring distance (4),
- a sound-reflecting interface is arranged opposite the sound pulse generator/receiver at the other end of the measuring distance (4) and
- the sound pulse generator/receiver can be excited by the registration of incoming sound pulses to emit sound pulses.

## Revendications

1. Procédé de détermination d'une valeur corrigée pour la vitesse sonore dépendant de la viscosité dans un fluide (1) à examiner,
- dans lequel des impulsions sonores sont générées et transmises au fluide (1) à examiner,
- dans lequel les impulsions sonores sont enregistrées après avoir parcouru une distance de mesure (4) prédéterminée dans le fluide (1) à examiner,
- dans lequel la première utilisation (Tofl, Tof2) de la première impulsion sonore reçue après avoir parcouru la distance de mesure (4) est déterminée et le temps de propagation de la première impulsion sonore reçue dans le fluide (1) à examiner est déterminé,
**caractérisé en ce que**
- une valeur de viscosité (η) est donnée ou déterminée pour le fluide (1) à examiner et
- le temps de propagation de la première impulsion sonore reçue et la valeur de viscosité (η) sont utilisés pour déterminer la vitesse du son dans le fluide (1) à examiner, de sorte que l'erreur de mesure due à la viscosité du fluide à examiner est ainsi corrigée lors de la détermination du temps de propagation de la première impulsion sonore reçue dans le fluide (1) à examiner.

2. Procédé selon la revendication 1, **caractérisé en ce que**
- un premier tableau de correction pour la relation entre la viscosité (η) et l'écart de première utilisation (ΔTof) de la première impulsion sonore reçue est fournie pour des fluides ayant respectivement une viscosité connue (η),
- une correction est effectuée en ce qui concerne la viscosité (η) de la première charge obtenue lors de la mesure de la première impulsion sonore reçue pour le fluide (1) à examiner au moyen du premier tableau de correction et de la valeur de viscosité (η) prédéfinie ou déterminée et
- la vitesse sonore dans le fluide (1) à examiner est déterminée par calcul à partir du temps de propagation corrigé de la première impulsion sonore reçue et de la longueur de la distance de mesure (4) prédéfinie.

3. Procédé selon la revendication 1, **caractérisé en ce que**
- un premier tableau d'ajustement pour la première utilisation (Tofl, Tof2) de la première impulsion sonore reçue est fourni pour des fluides ayant respectivement une vitesse sonore connue et une viscosité connue (η), et
- l'utilisation initiale (Tofl, Tof2) de la première impulsion sonore reçue et la valeur de viscosité (q) prédéfinie ou déterminée sont utilisées pour déterminer la vitesse sonore dans le fluide (1) à examiner au moyen du premier tableau d'ajustement.

4. Procédé selon l'une quelconque des revendications 1 à 3, **caractérisé en ce que**, comme première insertion (Tofl, Tof2) de la première impulsion sonore reçue
- le premier passage par zéro de l'impulsion sonore après le premier maximum enregistré de l'impulsion sonore, ou
- la première arrivée enregistrée de l'impulsion sonore, ou
- la position de pic du premier maximum de la première impulsion sonore enregistrée est déterminée.

5. Procédé selon l'une quelconque des revendications 1 à 4, **caractérisé en ce que**
- une valeur de viscosité connue (q) ou une plage de valeurs connue de la viscosité (η) est prédéfinie pour le fluide (1) à examiner ou
- une base de données de valeurs de viscosité connues (η) ou de plages de valeurs de la viscosité (η) pour des fluides est fournie et la valeur de viscosité (η) ou une plage de valeurs connue de la viscosité (η) pour le fluide (1) à examiner est déterminée dans la base de données.

6. Procédé selon l'une quelconque des revendications 1 à 4, **caractérisé en ce que** la valeur de viscosité (η) pour le fluide (1) à examiner est déterminée au moyen d'un procédé de mesure de la viscosité (η), en particulier au moyen d'un oscillateur de flexion.

7. Procédé selon la revendication 3, **caractérisé en ce que**
- un second tableau d'ajustement est fourni pour la relation entre la viscosité (η) et la largeur d'impulsion (P ; P1, P2) de la première impulsion sonore reçue après avoir parcouru la distance de mesure (4) pour des fluides ayant respectivement une viscosité connue (η),
- la largeur d'impulsion (P; P1, P2) de la première impulsion sonore reçue après avoir parcouru la distance de mesure (4) est déterminée dans le fluide (1) à examiner et
- la valeur de viscosité (η) du fluide (1) à examiner est déterminée au moyen du second tableau d'ajustement et de la largeur d'impulsion (P; P1, P2) déterminée de la première impulsion sonore reçue.

8. Procédé selon la revendication 7, **caractérisé en ce que**, comme largeur d'impulsion (P; P1, P2) de la première impulsion sonore reçue
- l'intervalle de temps entre le moment où l'impulsion sonore est reçue pour la première fois et le premier passage par zéro enregistré de l'impulsion sonore, ou
- la largeur à mi-hauteur de la première impulsion sonore reçue est déterminée.

9. Procédé selon la revendication 2 ou 3, **caractérisé en ce que**
- le premier tableau de correction pour la relation entre la viscosité (η) et l'écart de première utilisation (ΔTof) ou le premier tableau d'ajustement pour la première utilisation (Tofl, Tof2) de la première impulsion sonore reçue est fourni pour des fluides ayant respectivement une vitesse sonore connue et une viscosité connue (η) à différentes températures,
- la température du fluide (1) à examiner est déterminée pendant la mesure et
- la température est prise en compte lors de la correction de la valeur de la vitesse du son obtenue lors de la mesure au moyen du premier tableau de correction ou du premier tableau d'ajustement.

10. Procédé selon l'une quelconque des revendications 7 à 8, **caractérisé en ce que**
- un premier tableau de correction pour la relation entre la viscosité (η) et l'écart de première utilisation (ΔTof) et le second tableau d'ajustement pour la relation entre la viscosité (η) et la largeur d'impulsion (P ; P1, P2) sont utilisés pour établir un tableau de correction commun, dans lequel
- l'écart de première utilisation (ΔTof) est déterminé au moyen de la largeur d'impulsion (P ; P1, P2) déterminée pour le fluide (1) à examiner et du tableau de correction commun et
- la vitesse sonore dans le fluide (1) à examiner est déterminée par calcul à partir du temps de propagation corrigé de la première impulsion sonore reçue et de la longueur de la distance de mesure (4) prédéfinie, ou
- le premier tableau d'ajustement pour la première utilisation (Tofl, Tof2) de la première impulsion sonore reçue pour des fluides ayant respectivement une vitesse sonore connue et une viscosité connue (q) et le second tableau d'ajustement pour la relation entre la viscosité (η) et la largeur d'impulsion (P ; P1, P2) pour des fluides ayant respectivement une viscosité connue (η) sont utilisés pour établir un tableau de correction commun,
- dans lequel la première utilisation (T of1, Tof2) déterminée pour le fluide (1) à examiner de la première impulsion sonore reçue et la largeur d'impulsion (P ; P1, P2) déterminée pour le fluide (1) à examiner sont utilisées pour déterminer la vitesse sonore au moyen du tableau de correction commun.

11. Procédé selon l'une quelconque des revendications précédentes, **caractérisé en ce que**
- la viscosité (η) du fluide à examiner est supérieure à 1 000 mPa.s et/ou **en ce que** la longueur de la distance de mesure (4) est inférieure à 1 cm.

12. Dispositif de détermination d'une valeur corrigée pour la vitesse sonore dépendant de la viscosité dans un fluide (1) à examiner, comprenant
- un générateur d'impulsions sonores (2) pour l'émission d'impulsions sonores et un récepteur d'impulsions sonores (3) pour l'enregistrement d'impulsions sonores entrantes, dans lequel une distance de mesure (4) prédéterminée est disposée dans une cellule de mesure (5) entre le générateur d'impulsions sonores et le récepteur d'impulsions sonores, et
- une unité d'évaluation (6) reliée au générateur d'impulsions sonores (2) et au récepteur d'impulsions sonores (3),
**caractérisé en ce que**
le générateur d'impulsions sonores, le récepteur d'impulsions sonores et
l'unité d'évaluation sont réalisés pour
exécuter un procédé selon l'une quelconque des revendications 1 à 5, 7, 8 ou 10.

13. Dispositif selon la revendication 12, **caractérisé en ce qu'**un capteur (7) relié à l'unité d'évaluation (6) est prévu pour déterminer la température du fluide (1) à examiner, et dans lequel en outre l'unité d'évaluation est réalisée alternativement pour exécuter un procédé selon la revendication 9.

14. Dispositif selon la revendication 12 ou 13, **caractérisé en ce que**
- le générateur d'impulsions sonores (2) et le récepteur d'impulsions sonores (3) sont réalisés sous la forme d'un générateur/récepteur d'impulsions sonores combiné, qui est disposé à une extrémité de la distance de mesure (4),
- à l'autre extrémité de la distance de mesure (4), une surface limite réfléchissant le son est disposée en face du générateur/récepteur d'impulsions sonores et
- le générateur/récepteur d'impulsions sonores peut être excité pour émettre des impulsions sonores par l'enregistrement d'impulsions sonores entrantes.
